# EUROPEAN PATENT SPECIFICATION

(11) **EP 3 857 660 B1**
(45) Date of publication and mention of the grant of the patent: **07.06.2023**
(21) Application number: 18811343.5
(22) Date of filing: 28.09.2018
(51) Int. Cl.: H02G 13/00, D07B 1/14, E01D 19/16

(54) **LIGHTNING MANAGEMENT MODULE FOR STRUCTURAL CABLE AND CORRESPONDING METHOD AND STRUCTURAL CABLE**
BLITZMANAGEMENTMODUL FÜR STRUKTURKABEL UND ENTSPRECHENDES VERFAHREN UND STRUKTURKABEL
MODULE DE GESTION DE LA FOUDRE POUR CÂBLE STRUCTUREL ET PROCÉDÉ ET CÂBLE STRUCTUREL CORRESPONDANTS

(43) Date of publication of application: 04.08.2021
(73) Proprietor: Soletanche Freyssinet, 92500 Rueil Malmaison (FR)
(72) Inventor: FABRY, Nicolas, 92160 Antony (FR); ZIVANOVIC, Ivica, 60260 Gouvieux (FR)
(74) Representative: Plasseraud IP
(86) International application number: PCT/IB2018/001327
(87) International publication number: WO 2020/065364

(56) References cited:
- WO-A1-2018/020289
- WO-A1-2018/130271
- WO-A1-2018/142174
- DE-A1- 10 233 528

## Description

The present invention relates to the field of structural cables used in the construction industry. It is applicable, in particular, to stay cables used for supporting, stiffening or stabilizing structures.

Stay cables are widely used to support suspended structures such as bridge decks or roofs. They can also be used to stabilize erected structures such as towers or masts.

A typical structure of a stay cable includes a bundle of tendons, for example wires or strands, housed in a collective plastic sheath. The sheath protects the metallic tendons of the bundle and provides a smooth appearance of the stay cable.

In certain cases, the sheath is in the form of an integral tube which extends from the lower anchoring point to the upper anchoring point of the stay cable. The tendons are threaded, usually one by one or small groups by small groups, into the sheath before anchoring them at both ends.

In other cases, the sheath is made of segments following each other along the cable. Each segment can be made of several sectors assembled around the bundle of tendons.

WO 2018/142174 A1 discloses a structural cable comprising a sheath having an internal housing.

WO 2018/020289 A1 discloses a double-sheathed structural cable.

DE 10233528 A1 discloses a lightning conductor for electrically connecting a collector to a grounding system for external lightning protection.

WO 2018/130271 A1 discloses a hybrid pipe for stay cable.

Due to their stabilizing role, stay cables are often used in high outside location. As such, these tend to draw lightning bolts, which can induce a fast and important heating of the stay cables, susceptible to turn into fire.

In order to prevent fire, it is known to provide additional auxiliary cables located above the highest stay cable and which serve as lightning rod.

Usually, such auxiliary cable is made of steel and linked to the ground.

However, although additional auxiliary cables are to draw most of the lightning bolts, the stay cables are not protected *per se* and are still vulnerable to a lightning bolt which would not be drawn by the auxiliary cable. Furthermore, depending on the construction work, providing an additional auxiliary cable with a proper location can be an issue.

An object of the present invention is to provide an improved lightning protection to structural cables.

To this end, a structural cable is provided as set out in the appended claims.

The load-bearing tendons are meant to carry important weights and are the backbone of the structural cable. They can be made of any material presenting the required mechanical properties for the use the structural cable is intended for. Typically, the tendons are made of steel. The bundle can consist in a plurality of load-bearing tendons which are consolidated together by additional linker. Alternatively, the load-bearing tendons can be consolidated into a bundle by their very organization and without necessitating such additional linker. For instance, the load-bearing tendons can be twisted together.

The sheath is typically made of high density polyethylene (HDPE) which is a material easy to process and presenting a high strength to density ratio. Furthermore, HDPE is a durable material which is safer than most its alternative (e.g. PVC) due to the fact that it tends to rip or tear in a malfunction instead of shattering and becoming brittle like other materials.

The sheath preferably tightly surrounds the bundle of load-bearing tendons so as to benefit from their mechanical properties as much as possible whilst saving as much place as possible.

The lightning management module is located on the sheath, i.e. on the external portion of the sheath. Any suitable means for fixing the lightning management module on the sheath can be used as long as the lightning conductor is not in direct contact with the sheath. The fireproof insulating protection element is the only part of the lightning management module which is in direct contact with the sheath.

Preferably, the lightning conductor is thermally and electrically insulated from the sheath.

The lightning conductor can be made of any element susceptible to draw and withstand a lightning bolt. These are typically made of steel. The term lightning conductor is to be understood as a synonym of lightning rod, except it does not necessarily present a rod shape. Parts of the lightning management modules which are not configured to draw and withstand lightning bolts are not parts of the lightning conductor.

The fireproof insulating protection element is designed to limit as much as possible any damage on the sheath in case the lightning conductor's temperature reaches high level, in case it ignites, or in case it becomes susceptible to transmit a high current to the sheath. These situations are typically generated by a lightning bolt. As long as it meets these requirements, the fireproof insulating protection element can be made of any suitable material.

A preferred material for the fireproof insulating protection element is a plastic or elastomeric material, for instance an elastomer silicone pre-molded or cast-in place when installing each lightning management module.

Preferably, the material for the fireproof insulating protection element is also an intumescent material. Intumescent material can advantageously further retard or even prevent the ignition of the material and, eventually, of the cable.

Within the frame of the present invention, two elements are in direct contact if at least one portion of an element mechanically touches another portion of the other element, without any intermediary. For instance, in case of an apple located on a table located on the floor, the apple is in direct contact with the table, and the table is in direct contact with the floor, but the apple is not in direct contact with the floor.

The present invention allows protecting a structural cable from lightning without the need of an additional auxiliary cable.

Lightning management modules designed to be used on structural cables of a construction works are a considerable improvement over auxiliary cables, or lightning management elements which were to be integrated to the very conception of the cable.

Providing a lightning management module which is self-sufficient and which allows to protect a structural cable from lightning *per se*, as long as the correct amount of modules is used, allows to consider the lightning management as a separate issue.

The lightning management module can have a polygonal or round slab shape which allows a high flexibility regarding the location of the lightning management module. Several modules can be located anywhere on a structural cable sheath. For instance, several slabs, preferably up to six slabs, can be positioned on a same section of a sheath so as to surround the sheath, or alternatively, the slab can be positioned on the parts of the sheath which are most vulnerable to lightning, or most susceptible to lightning bolts. In order to maximize the aforesaid flexibility and depending on the section of the corresponding structural cable, the slab can present a size comprised between 1 and 10 cm.

In an alternative embodiment, the at least one consolidated lightning management module has a ring shape. A ring shape is to be understood as meaning any shape homeomorphic to a torus, i.e. any shape susceptible to surround a cable sheath section. A lightning management module with a ring shape allows protecting the cable in all direction and can be self-sustaining provided it surrounds the sheath tightly enough.

Securing at least one lightning management module on the sheath can comprise surrounding the sheath with a lightning management module.

Said at least one consolidated lightning management module may have an open ring shape closed around the sheath. Such shape allows an easy positioning of the module. The means for closing the open ring shape around the sheath can be of any type and can consist e.g.in tightening the ring around the sheath, and in securing the open ring with shear pins at joints. In order to be positioned around the sheath, the module can be deformable. Alternatively, the module can consist of several rigid portions articulated together.

Said at least one consolidated lightning management modules can consist of a plurality of lightning management modules, and the distance between two consolidated lightning management modules can be comprised between 1 and 30 meters, preferably between 5 and 25 meters. Such repartition allows a long structural cable such as a stay cable used to support the construction of a bridge to be consistently protected from lightning on it whole length. The distance between two consecutive modules can be constant or, alternatively, can vary based on the criticality of the exposure to lightning.

Said at least one consolidated lightning management module is provided with means for energy or electrical charge dissipation. Namely, the energy or electrical charge dissipation results from grounding the module: said at least one consolidated lightning management module is advantageously grounded. The link between the module and the ground can be of any type as long as it is electrically conductive and able to withstand the current induced by a lightning bolt. Preferably, the link itself is thermally and electrically insulated from the sheath so as to provide improved protection to the cable.

The link between the module and the ground can be added on a preexisting cable in case the consolidated lightning management modules are added on a preexisting cable. The link can be added between the sheath and the bundle of load bearing cables as long as it is electrically and thermally insulated from both the sheath and the bundle of load-bearing tendons. Alternatively, the insulation can be performed or supplemented by injecting an electrically and thermally insulating material, preferably the same material that is used in the fireproof insulating protection element.

Said at least one consolidated lightning management module can for example be grounded by a conductive material located into an insulated cavity within the sheath. It can advantageously prevent any hindering of the set-up of the structural elements of the cable, such as strands. The whole path from the consolidated lightning management module to the ground is preferably insulated and fireproof. In particular, in case of a conductive material located into an insulated cavity within the sheath, the opening in the sheath between the module and the cavity is preferably insulated and fireproof. These proprieties can result from a continuous layer of the same material used in the fireproof insulating protection element.

The cavity can also be injected with said material.

Alternatively, said at least one consolidated lightning management module can be ungrounded. In such event, other means for energy dissipation must be provided so that the module can withstand a lightning bolt. Such means can include a material susceptible of a highly endothermic transformation, e.g. melting, vaporization, or a chemical reaction with a high activation energy. As a matter of fact, the endothermic transformation would allow dissipating the energy of the lightning bolt, thus preventing its transfer to the cable. Typically, a conductor made of an alloy presenting a very high melting temperature could be used.

Other features and advantages of the present invention disclosed herein will become apparent from the following description of non-limiting embodiments, with reference to the appended drawings, on which:
- figure 1 illustrates a structural cable according to the invention;
- figure 2 illustrates the structure of the cable of figure 1;
- figure 3 illustrates the cross-section of an embodiment of the cable of figure 2;
- figure 4 illustrates the cross section of an alternative embodiment of the cable of the present invention;
- figure 5 illustrates the cross section of an alternative embodiment of the cable of the present invention; and
- figure 6 illustrates the cross section of an alternative embodiment of the cable of the present invention.

It is understood that the described embodiments are not restrictive and that it is possible to make improvements to the invention without leaving the framework thereof.

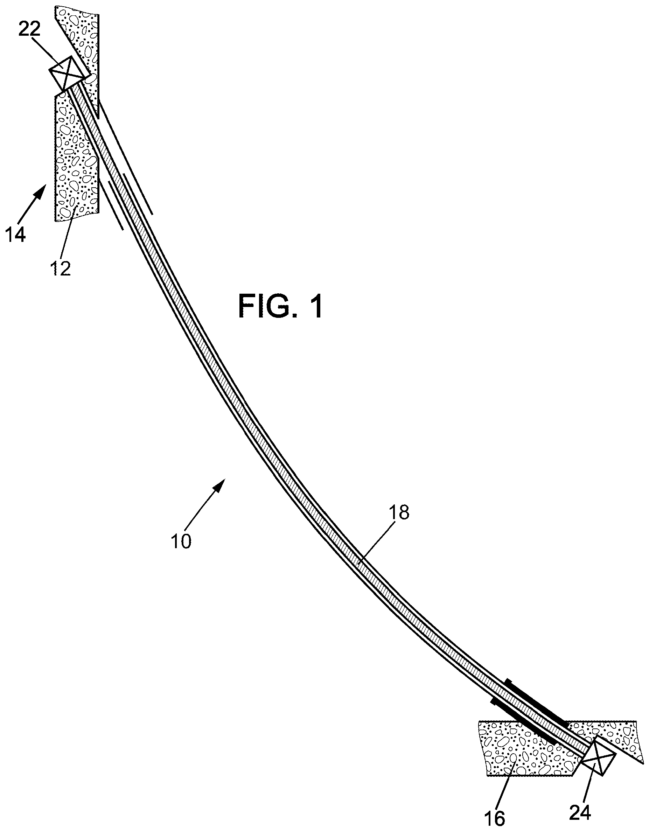

Figure 1 shows a structural cable 10 according to the invention, hereinafter cable 10. The cable 10 is preferentially a stay cable.

The cable 10 is configured to take up efforts applied to a structure 12 to which it is anchored. To that end, it extends between two parts 14, 16 of a construction work. The first part 14 is for instance at a higher position than the second part 16. For example, the first part 14 belongs to the structure 12, such as a tower, while the second part 16 belongs to a foundation to stabilize the structure. Alternatively, the first part 14 may belong to a pylon, while the second part 16 belongs to some structure suspended from the pylon.

The construction work typically includes a number of structural cables 10, only one of them being shown in figure 1.

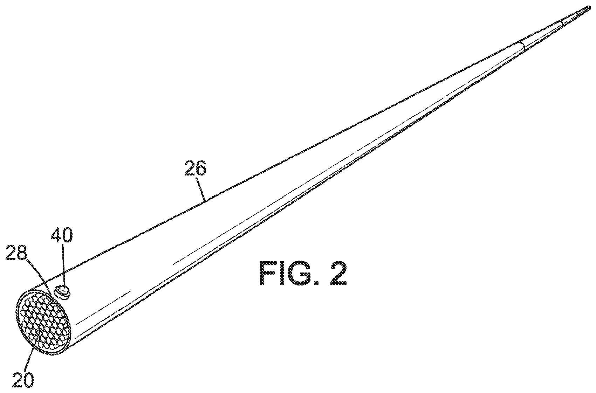

The structural cable 10 comprises a load-bearing part 18 which comprises a bundle of tendons 20 disposed parallel to each other (Figure 2). For example, the bundled tendons may be strands of the same type as used to prestress concrete structures. They are for instance made of steel. Each strand may optionally be protected by a substance such as grease or wax and/or individually contained in a respective plastic sheath (Figure 2).

The bundle 20 forms the structural core of the cable 10, i.e. a main load-bearing component of the cable. As discussed below, the structural cable 10 may include additional load-bearing components, such as additional tendons, which are at a distance from the bundle 20.

The cable 10 may have a length of up to several hundred meters. The bundle 20 may include a few tens of tendons.

The tendons of the bundle 20 are anchored at both ends of the bundle using an upper anchoring device 22 mounted on the first part 14 of the construction work and a lower anchoring device 24 mounted on the second part 16 of the construction work. Between the two anchoring devices 22, 24, the bundle of tendons for instance follows a catenary curve due to the weight of the cable and the tensile force maintained by the anchoring devices. The anchoring devices 22, 24 are positioned on the first and second parts 14, 16 by taking into account the pre-calculated catenary curve of each cable 10.

In reference to Figure 2, in addition to the load-bearing part 18, the cable 10 includes a sheath 26 within which the bundle 20 is received. The sheath forms a protective structure for the bundle.

Advantageously, the sheath 26 extends over more than 80% of the length of the bundle of tendons 20 between the anchoring devices 22, 24, or even more than 90% for long stay cables.

In the example illustrated in figure 1, the first end of the sheath 26 bears on a guide tube through which the bundle of tendons passes near the lower anchoring device 24, while the second end of the sheath 26 penetrates into another tube disposed on the first part 14 of the construction work, through which the upper end of the bundle of tendons passes to reach the upper anchoring device 22.

The sheath 26 has a cross-section which has any known shape.

For instance, this shape is chosen among polygonal, elliptical or circular. Advantageously, as shown on the Figures, this cross-section is circular.

The shape of the cross-section may vary along the longitudinal direction of the cable. Preferably however, it does not.

The sheath 26 is for instance made of high density polyethylene (known as PEHD or HDPE).

Advantageously, at least part of the outer surface of the sheath 26 has a color adapted to reflect light. For instance, it is thus white. Additionally or alternatively, at least the outer surface of the sheath 26 is resistant to ultraviolet rays. This may be the result of a surface treatment and/or of a specific composition of the material of the sheath itself over at least part of its thickness.

As the outer surface of the sheath 26 is destined to be in contact with the surrounding environment, it advantageously presents a surface treatment and/or structure destined to increase its resistance to the combined effects of rain and wind. For instance, the outer surface of the second sheath 26 thus presents at least one helical rib, and advantageously a double helical rib, running helically along all or part of the length of the outer surface of the sheath 26 (not shown).

The sheath 26 may be an integral member between its extremities. Alternatively, the sheath 26 includes longitudinal segments which are assembled together in an aligned manner, for instance through any known process. For instance, each segment has a length of a few meters, for instance between 6 and 12 m.

Each segment may present itself in the form of an integral piece of tube. Alternatively, one or more segment includes a plurality of sector-shaped elements assembled together by their edges.

The bundle of tendons 20 is located within the sheath 26 at a distance from the inner surface of the sheath 26. Advantageously, the bundle occupies a central position within the sheath, i.e. the bundle 20 is substantially centered with respect to the cross-section of the sheath 26 (i.e. its cross-section transversely relative to the longitudinal direction of the cable).

Alternatively, the bundle 20 is off-center relative to the cross-section of the sheath 26.

The bundle of tendons is advantageously compacted as illustrated in Figure 2 over at least part of its length, and advantageously at least over all its running part, i.e. its entire length optionally minus a few percents of its length or even less which are located in the vicinity of the anchoring devices 22, 24.

Preferably, the bundle of the tendons is compacted at least over the length of the cable 10 over which the housing 28 stretches.

By compacted, it is understood that the tendons of the bundle are maintained in contact with one another, for instance through the application of a centripetal clamping force to the tendons.

In reference to Figures 2, 3, and 5 the cable 10 according to the invention also includes a housing 28.

The housing 28 is located within the sheath 26. The housing 28 is fixed relative to the sheath 28.

The housing 28 defines a cavity 30. The housing 28 and the cavity 30 are at a distance from the bundle 20, the bundle 20 being located outside the cavity and the housing. In other words, the bundle 20 is not received in the cavity 30 or the housing 28.

The housing 28 and the cavity 30 stretch longitudinally along the bundle 20 and the structural cable 10. In other words, the housing 28 and the cavity 30 are arranged so as to run along the longitudinal direction of the cable 10.

Advantageously, the housing 28 defines the cavity over substantially its entire length.

Advantageously, the cavity 30 is continuous along its length. In other words, the cavity is not interrupted along the longitudinal direction of the cable. Alternatively, the cavity may be interrupted, for instance by one or more transverse element such as an inner wall. In such a scenario, the cavity may be seen as a group of adjacent cavities separated from one other by transverse element(s) which exhibit openings, whereby pieces of equipment may be laid out in continuous fashion in the cavity regardless of the transverse elements, and/or so that the various cavities are in fluid communication with one another.

Advantageously, the cross-section of the cavity with respect to the longitudinal direction of the cable has a substantially constant shape along this longitudinal direction.

Advantageously, the cross-section of the housing 28 transversely relative to the cable defines a single cavity at a given location along the housing 28. In other words, this cross-section defines one cavity and one only, as opposed to a plurality of cavities which may for instance be separated by a component of the housing or added to the housing such as a wall.

Advantageously, the housing 28 comprises a plurality of longitudinal segments which are aligned with one another along the cable 10.

For instance, each segment stretches over several meters, for instance six or more meters. For instance, each segment is associated to a segment of the sheath, and has substantially the same length. For instance, each segment is arranged in the corresponding sheath segment so as to have extremities which are located at a same position as that of the sheath segment.

Two consecutive segments of the housing are for instance connected to one other. For instance, they are thus interlocked. For instance, one end of a given segment is inserted in the adjacent end of the consecutive segments, which exhibits an appropriate configuration to that end.

Alternatively or in parallel, two consecutive segments are separated by a clearance. This clearance is for instance smaller than 1 cm.

In general, advantageously, the longitudinal interruptions of the housing 28 are minimal. Advantageously, the housing is substantially continuous over its length.

In some embodiments, the housing may be an integral member over its entire length.

It should be noted that the cable 10 may include a plurality of housings 28 which are at a distance from each other, either longitudinally along the direction of the cable 10, and/or circumferentially within the sheath 26.

The housing 28 is advantageously made of polyethylene, such as PEHD.

The housing 28 may be made of the same material as the sheath 26. Alternatively, the housing 28 is made of a material which differs from that of the sheath 26.

The cable 10 is provided with lightning management modules 40. Each lightning management module 40 consists of a lightning conductor 41 and an insulating fireproof protection 42 element which prevents any direct contact between the lightning conductor 41 and the cable 10.

The cavity 30 is advantageously destined to receive a grounding element 50 consisting of a conductive cable running all along the cavity from the lightning management modules 40 to the ground.

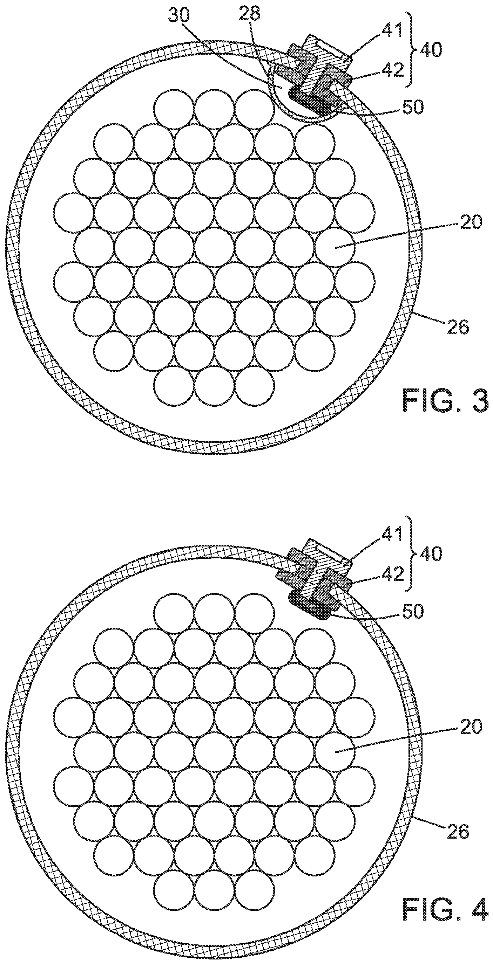

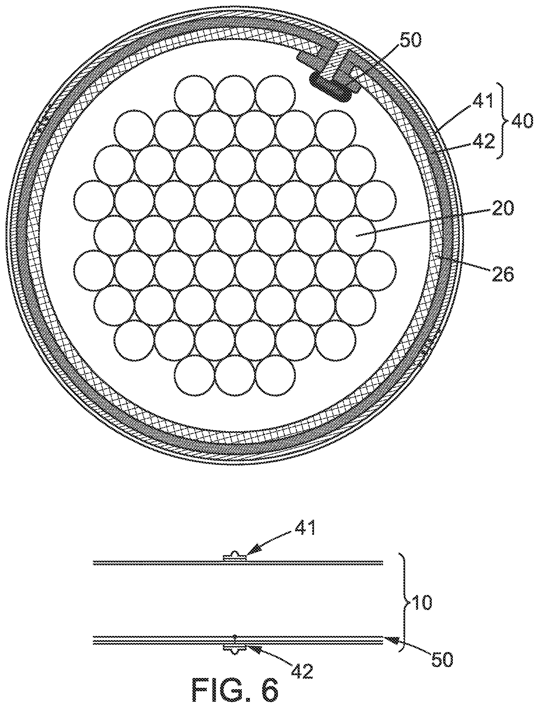

Alternatively, with reference to figure 4 and 6, the sheath is not provided with a housing and the grounding element 50 is located between the sheath and the bundle of load-bearing tendons. The grounding element is provided with an insulating fireproof protection layer or sheathing which allows to protect the cable in case of a lightning bolt although no housing is provided.

The grounding element 50 is connected to every lightning conductor 41 through an opening made into the sheath 26 and the protective element 42 of the conductor 41.

This opening is designed so as to prevent any direct contact between any conductive element linked to the lightning conductor 41 and the sheath 26. The opening is advantageously covered with the same material than the insulating fireproof protection element so as to impede any contact with the HDPE of the sheath 26.

Referring to figure 3 and 4, the lightning management module has a slab shape. Although only one lightning management module is illustrated, up to six modules can be located on a single section of the cable 10. They can be linked to a single grounding element or, alternatively, each of the up to six elements can be linked to corresponding up to six different grounding elements located in corresponding up to six cavities.

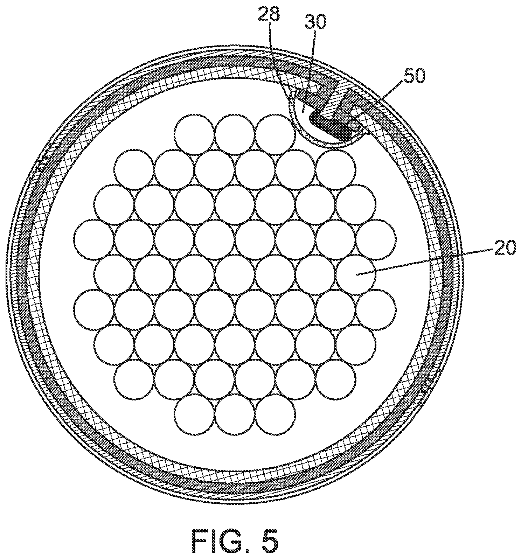

Alternatively, referring to figure 5 and 6, the lightning management module 40 has a ring shape.

The lightning conductor consists in a conductive outer ring 41 which is isolated from the sheath by an inner ring 42 made of insulating fireproof material. The inner ring corresponds to the insulating fireproof protection element of the invention and the outer ring corresponds to the lightning conductor.

The outer ring is linked to the grounding element 50 through a pin connection consisting of an insulated opening through the inner ring 42 and the sheath 26.

As seen on figure 4, the outer ring consists in a ribbon closed onto itself and presenting an outgrowth in the most central and external part of the ring.

Alternatively, any suitable cross section designed to improve the capacity of the ring to withstand a lightning bolt could be used.

As indicated above, the housing 28 and the cavity 30 may present different configurations, in particular in terms of cross-section of the housing.

Unless otherwise specified, the word "or" is equivalent to "and/or". Similarly, the word 'one' is equivalent to 'at least one' unless the contrary is specified. Unless otherwise specified, all percentages are weight percentages.

## Claims

1. A structural cable (10) of a construction work, the structural cable com pri sing:
a bundle (20) of load-bearing tendons,
a sheath (26) within which the bundle of tendons is located,
at least one consolidated lightning management module (40) located on the sheath (26),
wherein at least one consolidated lightning management module comprises a lightning conductor (41) and a fireproof insulating protection element (42),
wherein the protection element (42) is configured so as to prevent any direct contact between the lightning conductor (41) and the sheath (26),
wherein the at least one consolidated lightning management module (40) has one of a polygonal slab shape, a round slab shape and a ring shape surrounding a section of the sheath (26),
wherein the at least one consolidated lightning management module (40) is grounded by a conductive material (50) running from the at least one consolidated lightning management module (40) to the ground,
wherein the conductive grounding material (50) is connected to the lightning conductor (41) of each consolidated lightning management module (40) through a respective opening provided in the sheath (26) and the protection element (42) of said at least one consolidated lightning management module (40).

2. A structural cable according to claim 1, wherein the at least one consolidated lightning management module has an open ring shape closed around the sheath.

3. A structural cable according to claim 1, wherein a plurality of consolidated lightning management modules (42) having a polygonal or round slab shape are disposed on a same section of a sheath.

4. A structural cable according to claim 1, wherein the at least one consolidated lightning management module (42) has a polygonal or round slab shape and a size between 1 and 10 cm.

5. A structural cable according to any of claims 1 to 4, wherein the at least one consolidated lightning management modules (40) consists of a plurality of lightning management modules (40), and wherein the distance between two consolidated lightning management modules (40) is between 1 and 30 meters, preferably between 5 and 25 meters.

6. A structural cable according to any of claims 1 to 5, wherein the conductive material (50) is located into an insulated cavity (30) within the sheath (26).

7. A structural cable according to claim 1, wherein the lightning conductor comprises a conductive outer ring (41) isolated from the sheath (26) by an inner ring (42) corresponding to an insulating fireproof protection element.

8. A structural cable according to claim 7, wherein the outer ring (41) is linked to a grounding element (50) extending within the sheath (26) through a pin connection including an insulated opening through the inner ring (42) and the sheath (26).

9. A structural cable according to claim 7 or claim 8, wherein the outer ring (42) consists in a ribbon closed onto itself and presenting an outgrowth in a central and external part thereof.

## Patentansprüche

1. Strukturkabel (10) eines Bauwerks, wobei das Strukturkabel Folgendes umfasst:
ein Bündel (20) von lasttragenden Spanngliedern,
eine Ummantelung (26), in der sich das Bündel von Spanngliedern befindet,
mindestens ein konsolidiertes Blitzmanagementmodul (40), das auf der Ummantelung (26) angeordnet ist,
wobei mindestens ein konsolidiertes Blitzmanagementmodul einen Blitzableiter (41) und ein feuerfestes Isolationsschutzelement (42) umfasst,
wobei das Schutzelement (42) so konfiguriert ist, dass es jeden direkten Kontakt zwischen dem Blitzableiter (41) und der Ummantelung (26) verhindert,
wobei das mindestens eine konsolidierte Blitzmanagementmodul (40) eine von einer polygonalen Plattenform, einer runden Plattenform und eine Ringform aufweist, die einen Abschnitt der Ummantelung (26) umgibt,
wobei das mindestens eine konsolidierte Blitzmanagementmodul (40) durch ein leitendes Material (50) geerdet ist, das von dem mindestens einen konsolidierten Blitzmanagementmodul (40) zur Erde verläuft,
wobei das leitende Erdungsmaterial (50) mit dem Blitzableiter (41) jedes konsolidierten Blitzmanagementmoduls (40) durch eine entsprechende Öffnung in der Ummantelung (26) und dem Schutzelement (42) des mindestens einen konsolidierten Blitzmanagementmoduls (40) verbunden ist.

2. Strukturkabel nach Anspruch 1, wobei das mindestens eine konsolidierte Blitzmanagementmodul eine offene Ringform aufweist, die um die Ummantelung geschlossen ist.

3. Strukturkabel nach Anspruch 1, wobei eine Vielzahl von konsolidierten Blitzmanagementmodulen (42) mit einer polygonalen oder runden Plattenform auf einem selben Abschnitt einer Ummantelung angeordnet sind.

4. Strukturkabel nach Anspruch 1, wobei das mindestens eine konsolidierte Blitzmanagementmodul (42) eine polygonale oder runde Plattenform und eine Größe zwischen 1 und 10 cm aufweist.

5. Strukturkabel nach einem der Ansprüche 1 bis 4, wobei das mindestens eine konsolidierte Blitzmanagementmodul (40) aus einer Vielzahl von Blitzmanagementmodulen (40) besteht und wobei der Abstand zwischen zwei konsolidierten Blitzmanagementmodulen (40) zwischen 1 und 30 Metern, vorzugsweise zwischen 5 und 25 Metern, liegt.

6. Strukturkabel nach einem der Ansprüche 1 bis 5, wobei das leitende Material (50) in einem isolierten Hohlraum (30) innerhalb der Ummantelung (26) angeordnet ist.

7. Strukturkabel nach Anspruch 1, wobei der Blitzableiter einen leitenden Außenring (41) umfasst, der von der Ummantelung (26) durch einen Innenring (42) isoliert ist, der einem feuerfesten Isolationsschutzelement entspricht.

8. Strukturkabel nach Anspruch 7, wobei der Außenring (41) mit einem Erdungselement (50) verbunden ist, das sich innerhalb der Ummantelung (26) durch eine Stiftverbindung mit einer isolierten Öffnung durch den Innenring (42) und der Ummantelung (26) erstreckt.

9. Strukturkabel nach Anspruch 7 oder 8, wobei der Außenring (42) aus einem in sich geschlossenen Band besteht, das in einem mittleren und äußeren Teil davon einen Auswuchs aufweist.

## Revendications

1. Câble structurel (10) d'un ouvrage de construction, le câble structurel comprenant :
un faisceau (20) de tendons porteurs,
une gaine (26) à l'intérieur de laquelle est situé le faisceau de tendons,
au moins un module de gestion de la foudre (40) consolidé situé sur la gaine (26),
dans lequel au moins un module de gestion de la foudre consolidé comprend un paratonnerre (41) et un élément de protection (42) isolant ignifuge,
dans lequel l'élément de protection (42) est configuré de manière à empêcher tout contact direct entre le paratonnerre (41) et la gaine (26),
dans lequel l'au moins un module de gestion de la foudre (40) consolidé a une parmi une forme de dalle polygonale, une forme de dalle ronde et une forme d'anneau entourant une section de la gaine (26),
dans lequel l'au moins un module de gestion de la foudre (40) consolidé est mis à la terre par un matériau conducteur (50) allant de l'au moins un module de gestion de la foudre (40) consolidé à la terre,
dans lequel le matériau conducteur de mise à la terre (50) est connecté au paratonnerre (41) de chaque module de gestion de la foudre (40) consolidé à travers une ouverture respective prévue dans la gaine (26) et l'élément de protection (42) dudit au moins un module de gestion de la foudre (40) consolidé.

2. Câble structurel selon la revendication 1, dans lequel l'au moins un module de gestion de la foudre consolidé a une forme d'anneau ouvert fermé autour de la gaine.

3. Câble structurel selon la revendication 1, dans lequel une pluralité de modules de gestion de la foudre consolidés (42) ayant une forme de dalle polygonale ou ronde sont disposés sur une même section d'une gaine.

4. Câble structurel selon la revendication 1, dans lequel l'au moins un module de gestion de la foudre consolidé (42) a une forme de dalle polygonale ou ronde et une taille entre 1 et 10 cm.

5. Câble structurel selon l'une quelconque des revendications 1 à 4, dans lequel les au moins un modules de gestion de la foudre (40) consolidés consistent en une pluralité de modules de gestion de la foudre (40), et dans lequel la distance entre deux modules de gestion de la foudre (40) consolidés est entre 1 et 30 mètres, de préférence entre 5 et 25 mètres.

6. Câble structurel selon l'une quelconque des revendications 1 à 5, dans lequel le matériau conducteur (50) est situé dans une cavité isolée (30) à l'intérieur de la gaine (26).

7. Câble structurel selon la revendication 1, dans lequel le paratonnerre comprend un anneau extérieur (41) conducteur isolé de la gaine (26) par un anneau intérieur (42) correspondant à un élément de protection ignifuge isolant.

8. Câble structurel selon la revendication 7, dans lequel l'anneau extérieur (41) est relié à un élément de mise à la terre (50) s'étendant à l'intérieur de la gaine (26) à travers une connexion à broche comportant une ouverture isolée à travers l'anneau intérieur (42) et la gaine (26).

9. Câble structurel selon la revendication 7 ou la revendication 8, dans lequel l'anneau extérieur (42) consiste en un ruban fermé sur lui-même et présentant une excroissance dans une partie centrale et externe de celui-ci.
